(19) Europäisches Patentamt

European Patent Office

Office européen des brevets

(11) Numéro de publication : **0 289 369 B1**

(12) **FASCICULE DE BREVET EUROPEEN**

(45) Date de publication du fascicule du brevet :
**22.01.92 Bulletin 92/04**

(21) Numéro de dépôt : **88400423.5**

(22) Date de dépôt : **24.02.88**

(51) Int. Cl.⁵ : **B29D 23/22,** B29C 53/08,
B29C 67/22, F16L 11/11,
F16L 59/14

(54) **Procédé de fabrication d'un tuyau flexible comprenant des moyens de repérage et/ou de fixation.**

(30) Priorité : **30.04.87 FR 8706224**

(43) Date de publication de la demande :
**02.11.88 Bulletin 88/44**

(45) Mention de la délivrance du brevet :
**22.01.92 Bulletin 92/04**

(84) Etats contractants désignés :
**AT BE CH DE ES FR GB GR IT LI LU NL SE**

(56) Documents cités :
**DE-U- 8 509 929**
**FR-A- 2 064 419**
**FR-A- 2 520 664**
**GB-A- 1 587 243**
**US-A- 4 124 678**
**US-A- 4 205 034**
**US-A- 4 249 971**

(56) Documents cités :
**PATENT ABSTRACTS OF JAPAN, vol. 10, no. 342 (M-536)[2398], 19 novembre 1986, page 117 M; & JP-A-61 144 223 (SANKYO ALUM IND CO., LTD) 01-07-1986**
**EUROPEAN JOURNAL OF CELLULAR PLAS-TICS, vol. 2, no. 4, octobre 1979, pages 151-156, Technomic Publishing Co., Inc.; P. JENTET: "Good reasons for choosing an origi-nal structural thermoplastic foam extrusion process"**

(73) Titulaire : **CAOUTCHOUC MANUFACTURE ET PLASTIQUES**
**143bis, rue Yves le Coz**
**F-78005 Versailles (FR)**

(72) Inventeur : **Matte, Pierre**
**36, rue des Chauvelles**
**F-58000 Nevers (FR)**
Inventeur : **Deschemaeker, Maurice**
**6, rue Jules Renard Coulanges les Nevers**
**F-58640 Varennes-Gauzelles (FR)**
Inventeur : **Colley, Robert**
**29, rue du Levant**
**F-58300 Decize (FR)**

# Description

L'invention concerne le domaine du transfert ou de la circulation des fluides dans les applications industrielles ou automobiles.

Elle consiste en la réalisation sur des tuyaux flexibles, comportant une paroi au moins partiellement cellularisée, de nervures, de gorges, de repères d'identification ou d'épaulements.

Le document FR 2.520.664 de la demanderesse décrit un procédé de moulage des extrémités de tuyaux souples en caoutchouc qui permet, en outre, de réaliser des gorges ou des nervures.

L'inconvénient d'un tel procédé est de mettre en oeuvre un serrage radial des extrémités qui, en raison des contraintes exercées serait inapplicable à un tuyau flexible comportant une paroi en matériau cellularisable. En outre, la création des gorges ou nervures n'est réalisable que dans les zones d'extrémité.

Les réalisations de l'art antérieur ne prévoient pas la possibilité de créer, en quelque emplacement que ce soit, de manière simple, dans l'épaisseur cellulaire de paroi de tuyaux flexibles des gorges, des nervures, des repères ou des épaulements.

L'objet de l'invention est donc la mise au point d'un tuyau flexible, d'une fabrication simple — donc peu coûteuse et ne nécessitant pas l'utilisation d'un outillage onéreux — comportant dans sa paroi un matériau cellularisé, ledit tuyau flexible étant muni de moyens de repérage, de montage ou d'identification intégrés dans des zones de ladite paroi.

Le procédé de réalisation dudit tuyau flexible, objet de l'invention, est caractérisé en ce que le constituant en composition élastomérique cellularisable de la paroi dudit tuyau est empêché de s'expanser, en épaisseur, au cours de la fabrication, totalement ou partiellement, dans au moins une desdites zones correspondant à la création de nervures ou de gorges pour la pose de colliers de serrage sur embout, à la création de repères d'identification ou de supports ou encore à la création d'épaulements.

Dans une variante, c'est par la présence du collier de serrage lui-même qu'est empêchée, localement, l'expansion en épaisseur, totale ou partielle, de la composition élastomérique cellularisable, composant de la paroi dudit tuyau.

Le procédé de réalisation, objet de l'invention, concerne un tuyau flexible, constitué, au moins, des éléments suivants, de l'intérieur vers l'extérieur :

— un tube interne, réalisé en composition élastomérique compacte, de formulation adaptée au fluide à véhiculer,

— et un revêtement externe cellulaire, réalisé dans une composition élastomérique cellularisable, de formulation adaptée aux conditions d'utilisation et capable de former une peau extérieure quasi compacte, d'aspect sensiblement lisse, ledit revêtement cellularisé pouvant revêtir tout ou partie de la longueur du tuyau.

Le tuyau flexible comprend, en outre, le plus souvent, interposé entre le tube interne et le revêtement cellularisé, au moins un élément de renfort, constitué de tissus, de fils ou de cablés textiles ou métalliques, et, éventuellement une fine couche réalisée en composition élastomérique compacte, insérée entre le matériau de renforcement et la composition élastomérique cellularisable.

Dans certaines conditions d'utilisation en environnement sévère, particulièrement abrasif ou corrosif, il est également possible de munir le tuyau flexible d'un revêtement protecteur à la périphérie de la zone cellularisée qui en constitue alors partiellement la paroi, le revêtement protecteur pouvant être ou non, selon les besoins, séparé de la paroi cellularisée par interposition d'un élément — le plus généralement textile — répartiteur de contraintes et désigné sous les termes de "breaker" ou de "liner externe".

Le procédé de fabrication dudit tuyau flexible consiste en ce que la composition élastomérique cellularisable — qui constitue un composant de l'épaisseur et s'étend sur tout ou partie de la longueur du tuyau flexible — se présente sous forme compacte au moment de la confection dudit tuyau flexible et ne s'expanse, pour former une couche de matériau cellulaire, qu'au moment du traitement thermique destiné à provoquer la vulcanisation des composants élastomériques.

Ledit procédé de fabrication du tuyau flexible est donc caractérisé en ce que cette expansion est localement limitée par des moyens appropriés tels que des coquilles placées dans les zones où l'expansion doit être contrôlée.

Les caractéristiques et variantes de l'invention seront mieux comprises à la lecture de la description accompagnant les dessins, dans lesquels :

— la figure 1 décrit quelques possibilités de constitution du tuyau flexible ;

— la figure 2 présente deux variantes du tuyau flexible à collier de serrage intégré à la paroi ;

— la figure 3 montre deux variantes du tuyau flexible utilisant, également, l'expansion limitée de la composition élastomérique cellularisable ;

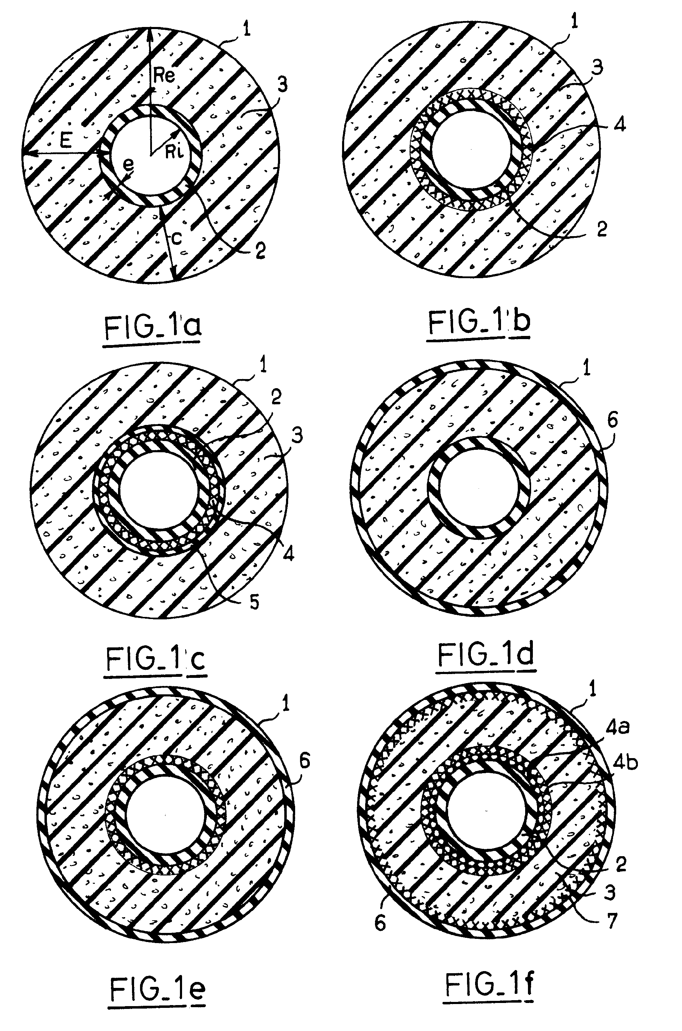

La figure 1 décrit, à titre d'exemples non limitatifs, quelques possibilités de constitution du tuyau flexible, auquel s'applique le procédé de fabrication, objet de l'invention.

La vue 1a illustre, en coupe transversale, la constitution la plus simple dans laquelle le tuyau flexible (1) ne comporte que deux éléments, soit, de l'intérieur vers l'extérieur, un tube interne (2), réalisé en composition élastomérique compacte d'épaisseur (e) et une couche (3), en composition élastomérique cellularisée d'épaisseur (c).

Dans les configurations les plus usuelles, l'épaisseur (e) de la couche en composition élastomérique compacte constituant le tube interne (2) est faible devant l'épaisseur totale (E = Re – Ri), Re étant le rayon extérieur de la section et Ri le rayon intérieur de la section du tuyau flexible.

Le plus généralement, le rapport de l'épaisseur (e) de la couche en composition élastomérique compacte qui constitue le tube interne (2) à l'épaisseur (c) de la couche en composition élastomérique cellularisée est comprise entre 0,09 et 1.

Il est cependant des cas où le rapport de l'épaisseur (e) de la couche en composition élastomérique compacte (2) à l'épaisseur totale (E) de la paroi peut atteindre — voire dépasser — 0,80.

La composition élastomérique compacte du tube interne (2) recevra une formulation adaptée, afin de permettre audit tube interne (2) de résister au fluide véhiculé.

C'est ainsi, par exemple, que l'élastomère de base de la composition élastomérique compacte constituant le tube interne (2) sera un terpolymère d'éthylène, de propylène et d'un troisième monomère diénique (EPDM) si le tube interne doit résister à la chaleur ou aux fluides oxydants. Par contre, l'EPDM sera évité, comme élastomère de base de la composition élastomérique compacte du tube interne (2) pour le transport des huiles ou des hydrocarbures.

Pour des raisons d'hygiène, une formulation particulière, qui peut également être à base d'EPDM, sera adoptée pour le transport de fluides alimentaires, tels que l'eau, le lait ou le vin, ou de fluides amenés à entrer en contact avec des denrées alimentaires.

L'élastomère de base de la composition élastomérique compacte du tube interne (2) sera, préférentiellement, un copolymère de butadiène et d'acrylonitrile (NBR) ou du polyéthylène chloré (CM) pour le transport des hydrocarbures liquides ou gazeux et des produits gras.

Par contre, le NBR sera évité comme élastomère de base de la composition élastomérique compacte du tube interne (2) si le tuyau flexible est destiné au transport d'eau chaude.

Le polychloroprène sera préférentiellement adopté comme élastomère de base de la composition élastomérique compacte du tube interne (2) pour le transport des huiles et des hydrocarbures, comme le NBR, mais aussi pour le transport d'un grand nombre de fluides chimiques à l'agression desquels il offre une bonne résistance.

La composition élastomérique cellularisable de la couche (3) recevra une formulation adaptée, afin de permettre au tuyau flexible (1) de résister à l'environnement dans lequel il sera utilisé.

Ladite composition élastomérique cellularisable comporte un élastomère de base tel que, à titre d'exemples non limitatifs, du caoutchouc naturel, du SBR, un terpolymère d'éthylène, de propylène et d'un termonomère diénique (EPDM), un copolymère de butadiène et d'acrylonitrile (NBR) ou du polyéthylène chloré (CM).

Les systèmes de vulcanisation et de protection contre le viellissement ainsi que les charges sont adaptés aux conditions d'utilisation.

La composition élastomérique cellularisable contient, en outre, un agent porogène qui provoquera, sous l'effet d'un traitement thermique, la formation des cellules et peut, à titre d'exemples non limitatifs, être choisi parmi les composés organiques tels que l'azodicarbonamide, l'azodiisobutyronitrile, le pp'oxy bis benzene sulfonylhydrazide ou la dinitrosopentaméthylène tétramine. Il est également possible d'utiliser un agent gonflant minéral tel qu'un carbonate d'ammonium.

La nature et la proportion d'agent porogène introduit au sein de l'élastomère sont fonction de la densité et de la taille des cellules recherchées.

La composition élastomérique cellularisable de la couche (3) se présente sous forme compacte au moment de sa pose sur tout ou partie de la périphérie de la couche en composition élastomérique compacte constituant le tube interne (2), au cours de la confection du tuyau flexible (1), la cellularisation n'intervenant que lors du traitement thermique de vulcanisation qui doit s'opérer à une température convenable pour provoquer la réaction de l'agent porogène.

La vue 1b illustre une autre constitution du tuyau flexible (1), dans laquelle une couche de renforcement (4), constituée de tissu, de fils ou de câbles textiles ou métalliques a été insérée entre le tube interne (2) et la couche en composition élastomérique cellularisée (3), ce qui permet de "donner du corps" au tuyau flexible (1).

La vue 1c représente une variante de construction du tuyau flexible (1) dans laquelle une couche fine (5), en composition élastomérique compacte est ajoutée entre l'élément de renforcement (4), placé extérieurement au tube interne en composition élastomérique également compacte (2), et la couche en composition élastomérique cellularisée (3), afin de créer un gradient de modules depuis le module élevé de l'élément de renforcement (4) jusqu'au module apparent, faible, de la couche en composition élastomérique cellularisée (3), ce qui a pour effet d'assurer une meilleure répartition des contraintes et d'accroître l'adhérence entre les éléments constitutifs du tuyau flexible.

Dans les vues 1a, 1b et 1c, la composition élastomérique cellularisée (3) comporte, à sa périphérie externe, une peau intégrée, venue directement de fabrication, présentant un aspect sensiblement lisse et constituant le revêtement du tuyau flexible (1).

Pour des applications en environnement sévère — particulièrement abrasif ou corrosif par exemple, le tuyau flexible (1) peut, en outre, recevoir, au dessus des constitutions précédemment illustrées, un revêtement (6) en composition élastomérique compacte, de formulation adaptée aux contraintes de l'utilisation, ce qui conduit aux constitutions des vues 1d et 1e, par exemple, correspondant respectivement aux vues 1a et 1b.

La vue 1f schématise la construction d'un tuyau flexible (1) dans laquelle deux éléments de renforcement constitués de tissu, de fils ou de câbles textiles ou métalliques (4a) et (4b) sont interposés entre le tube interne (2) et la couche en composition élastomérique cellularisée (3) sur laquelle est posé un élément répartiteur de contraintes, généralement appelé "breaker" (7) et constitué de tissu ou de câbles métalliques ou textiles, lui-même recouvert d'un revêtement externe (6) destiné à protéger le tuyau flexible (1) en cas d'utilisation en environnement hostile.

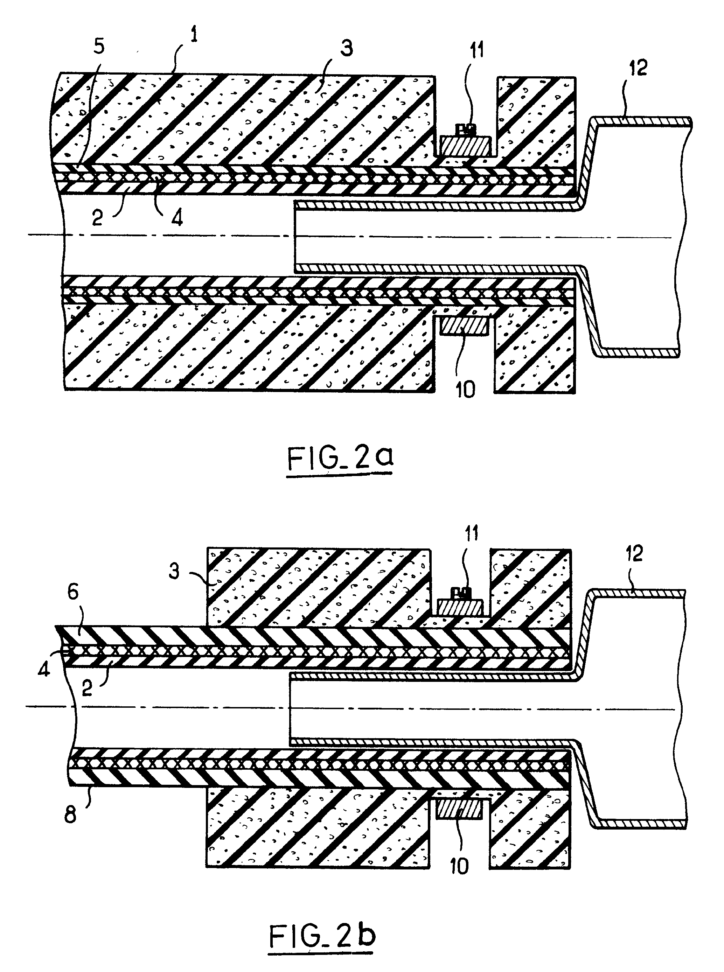

La figure 2 présente deux réalisations de tuyaux flexibles à collier de serrage intégré à la paroi.

La vue 2a montre, en coupe, comment le tuyau flexible (1), constitué du tube interne (2) en composition élastomérique compacte, de l'élément de renforcement (4), de la couche fine en composition élastomérique compacte (5) et de la couche (3) en composition élastomérique cellularisée peut être équipé, en fabrication, d'un collier de serrage (10) — généralement métallique — éventuellement muni d'un vis (11) comme représenté, ou de tout autre moyen de fixation, permettant le montage étanche dudit tuyau flexible (1) sur un embout, rigide (12) qui en assure le raccordement à un organe de moteur ou de machine. Pour que le serrage soit efficace, il est nécessaire qu'il s'opère sur un matériau non cellularisé.

La technique, objet de l'invention, utilisée pour l'équipement du tuyau flexible (1) par le collier de serrage (10) consiste à empêcher la cellularisation de la composition élastomérique de la couche (3) dans la zone du collier, par l'emploi de coquilles ou du collier lui-même.

Les tuyaux flexibles ainsi réalisés comportent donc des colliers insérés dans des logements adaptés et qui, par voie de conséquence ne peuvent plus être perdus, au cours de la mise en place du tuyau flexible sur l'installation, comme celà se produit fréquemment par glissement dudit collier le long de l'extrémité dans le cas des tuyaux classiques. Cette technique permet, également, d'assurer un positionnement correct dudit collier sur l'embout, pour éviter que le serrage ne s'opère sur l'olive, ce qui provoquerait un manque d'étanchéité.

Un tel montage, permettant la pose d'un collier intégré est réalisable, comme l'illustre la vue 2b, sur un tuyau classique. Il suffit, en effet, de munir la zone d'extrémité du tuyau classique (8), — ici constitué d'un tube interne (2) et d'un revêtement externe (6), tous deux réalisés en composition élastomérique compacte et séparés par un élément de renforcement (4) —, d'un revêtement localisé, en composition élastomérique cellularisable (3) que l'on empêche — par exemple par l'emploi de coquilles — de s'expanser sous l'effet de la chaleur dans la zone destinée à recevoir le collier (10) pour le serrage sur l'embout de raccordement (12).

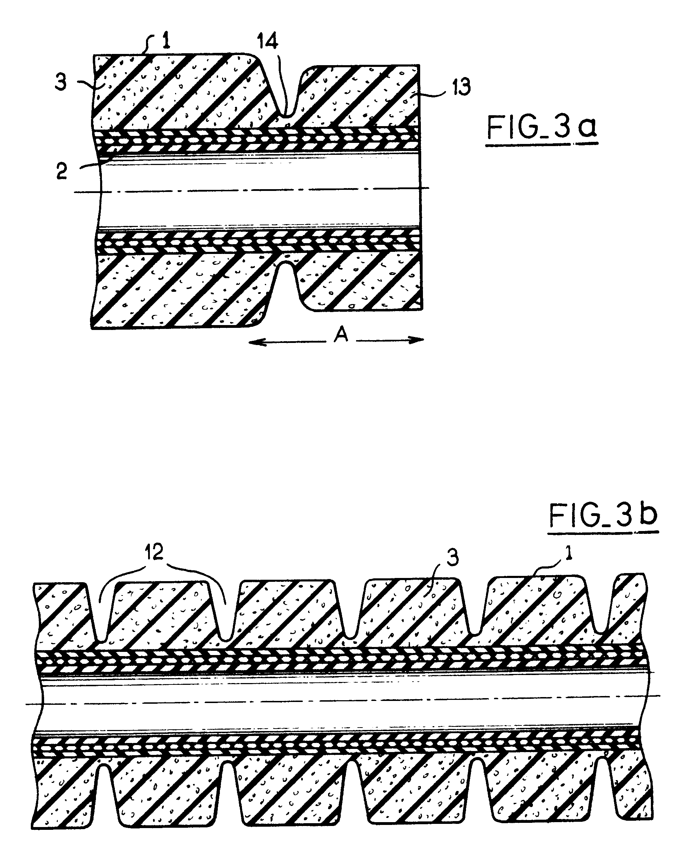

La figure 3 montre deux variantes du tuyau flexible, utilisant le même principe de réalisation.

Sur la vue 3a, l'extrémité (A) du tuyau flexible (1) comporte un épaulement (13), séparé du reste du corps du tuyau par une gorge (14).

La variante représentée comporte une seule gorge (14), mais il est bien évident pour l'homme de l'art que plusieurs gorges, de formes semblables ou différentes — peuvent être réalisées par le même procédé, pour constituer des repères d'identification ou de montage, par exemple.

Le principe de réalisation appliqué utilise, partiellement, le même principe que celui décrit pour la réalisation des variantes de la figure 2 puisqu'il permet de contrôler l'expansion de la composition élastomérique cellularisable constituant la couche (3) posée au dessus du tube interne (2) en composition élastomérique compacte, par moulage de l'extrémité (A) dans une coquille dont l'empreinte présente la forme désirée. C'est ainsi qu'en empêchant totalement la cellularisation se forme la gorge (14) et en limitant l'expansion se forme l'épaulement (13).

Il est possible, de la même manière, de réaliser des marquages ou d'obtenir des formes particulières de l'extrémité (A) du tuyau flexible (1).

La vue 3b illustre l'application du même principe à la réalisation de gorges multiples (14), espacées le long du corps du tuyau flexible (1), pour disposer, par exemple, de place en place, des dispositifs de suspension afin de permettre un accrochage en de multiples points, pour la traversée d'un atelier, d'un chantier ou d'un espace de grande longueur, en laissant au tuyau flexible une certaine souplesse, sans provoquer de coquage de la paroi aux points d'accrochage.

Un tel dispositif serait très appréciable, par exemple, pour les conduites de fluides de tout matériel appelé à se déplacer, comme les ponts roulants.

Un mode de fabrication selon l'invention du tuyau flexible consiste en une réalisation en grande longueur, selon les techniques d'extrusion habituellement utilisées dans l'industrie de transformation du caoutchouc.

Il consiste à extruder la composition élastomérique compacte, de formulation adaptée au fluide à véhiculer, qui constitue le tube interne, puis — éventuellement — à déposer en continu, par exemple par guipage, par tressage ou par tricotage, le (ou les) matériau(x) de renforcement et à placer ensuite, sur tout ou partie de la longueur une composition élastomérique alors compacte mais contenant des agents porogènes, lui permettant de se cellulariser sous l'effet de la chaleur.

Si le tuyau flexible comporte, en outre, un revêtement externe, la composition élastomérique compacte correspondante est également déposée, par exemple par extrusion, soit directement au dessus de la couche de composition élastomérique cellularisable soit après interposition d'un élément répartiteur de contrainte, le plus souvent réalisé en tissu, en fils ou en câbles textiles ou métalliques.

L'ensemble est alors vulcanisé par les moyens traditionnels, soit en grande longueur, soit en forme, après découpe à la longueur voulue et montage sur un mandrin de forme appropriée.

Au cours de l'opération de vulcanisation, le traitement thermique assure, simultanément, la cellularisation de la couche élastomérique cellularisable, la réticulation de toutes les compositions élastomériques et la solidarisation des différents éléments constitutifs.

Pour la réalisation du tuyau flexible à collier de serrage intégré sur un tuyau flexible comportant sur tout ou partie de sa longueur une couche en composition élastomérique cellularisable, il suffit, par des moyens mécaniques appropriés, d'empêcher l'expansion de la couche élastomérique cellularisable, dans la zone destinée au collier. Préférentiellement, le collier de serrage lui-même, éventuellement isolé de la couche cellularisable par un ruban, sera utilisé pour le serrage sur le mandrin et pourra donc rester en place après la vulcanisation.

Pour la réalisation d'encoches, d'épaulements, de repères, de marquages ou de formes particulières à l'extrémité ou dans différentes zones du tuyau flexible, il suffit d'enserrer — avant vulcanisation — ladite zone dans un moule ou une coquille dont l'empreinte présente la forme adéquate pour empêcher ou limiter l'expansion de la composition élastomérique cellularisable.

En conclusion, le tuyau flexible résultant du procédé objet de l'invention, offre, par rapport aux solutions antérieurement connues, les avantages suivants propres aux tuyaux flexibles à paroi cellularisée :

— il conserve une grande flexibilité, puisqu'il ne contient pas d'éléments rigidificateurs,

— il est léger puisqu'il ne comporte pas d'éléments de renforcement particuliers, autres que ceux nécessités par les contraintes d'utilisation, et que la densité de la couche en composition élastomérique cellularisée est faible,

— il offre une résistance améliorée lors d'une utilisation en aspiration,

— il permet la réalisation d'un tube interne lisse en composition élastomérique compacte, de formulation adaptée au fluide à véhiculer,

— il assure une protection du tube interne contre les agressions de nature thermique ou chimique de l'environnement,

— il protège le tube interne contre les risques de blessures accidentelles par des outils ou par le contact avec un élément métallique coupant,

— il est d'une fabrication aisée tant en grande longueur qu'en forme, sans nécessiter d'outillage ou de matériel autres que ceux utilisés de manière habituelle dans l'industrie de transformation du caoutchouc,

auxquels s'ajoute la possibilité de réalisation d'éléments comportant un (ou des) collier(s) de serrage intégré(s), devenant, de ce fait, impossible(s) à égarer et dont le positionnement garantit l'étanchéité, ou d'éléments permettant un repérage aisé de la pièce — ou même d'une extrémité du tuyau flexible par rapport à l'autre —, évitant ainsi les erreurs de montage sur les embouts de raccordement, ou encore d'épaulements ou de formes particulières sur n'importe quelle partie du tuyau flexible.

Le tuyau flexible, réalisé selon le procédé objet de l'invention, s'utilise dans tous les domaines industriels nécessitant le transfert d'un fluide — liquide, gazeux, voire pulvérulent — ou sur les différents circuits de fluides et/ou de climatisation d'un véhicule automobile, et apporte en outre, une facilité de repérage, d'identification, et/ou de montage.

L'homme de l'art peut, bien entendu, apporter au procédé de fabrication du tuyau flexible objet de l'invention et à ses variantes décrites à titre d'exemples non limitatifs, différentes modifications sans sortir du cadre de l'invention.

**Revendications**

1. Procédé de fabrication d'un tuyau flexible comportant, dans une partie au moins en épaisseur et en longueur de sa paroi, une couche de composition élastomérique, compacte au moment de la confection dudit tuyau flexible mais se cellularisant au cours de la vulcanisation en conduisant à la formation, à la périphérie externe, d'une peau d'aspect sensiblement lisse, et comportant des moyens de repérage, de montage et/ou d'identification intégrés dans des zones de la paroi, caractérisé en ce que la composition élastomérique cellularisable de la couche (3) est empêchée de s'expanser en épaisseur, totalement ou partiellement, dans au moins une desdites zones correspondant à la création de nervure(s) ou de gorge(s) (14) pour la pose de collier(s) (10) de serrage sur embout, à la création de repère(s) d'identification ou de support(s), ou encore à la création d'épaulement (13).

2. Procédé de fabrication d'un tuyau flexible selon la revendication 1, caractérisé en ce qu'au moins un collier de serrage (10) est utilisé, en cours de fabrication, pour empêcher, localement et au moins partiellement, l'expansion en épaisseur, de la composition élastomérique cellularisable de la couche (3), ledit collier de serrage (10) se trouvant, de ce fait, intégré à la paroi dudit tuyau flexible.

**Patentansprüche**

1. Verfahren zur Herstellung eines flexiblen Schlauchs, der mindestens auf einem Teil seiner Wand der Breite und der Länge nach eine Schicht von elastomerer Zusammensetzung aufweist, die im Zeitpunkt der Konvektionierung des flexiblen Schlauchs kompakt ist, aber im Verlauf der Vulkanisation zellig wird rind dabei an ihrem äußeren Umfang zur Bildung einer Haut von im wesentlichen glatter Gestalt führt und in Bereichen der Wand integrierte Mittel zur Kennzeichnung, Montage und/oder Identifizierung aufweist, dadurch gekennzeichnet, daß die in den zelligen Zustand überführbare elastomere Zusammensetzung der Schicht (3) in mindestens einem der Bereiche entsprechend der Schaffung einer (von) Rippe (n) oder einer (von) Einschnürung (en) (14) für die Anlegung eines (von) Schlauchbinders (n) (10) für Ansatzstücke, der Schaffung einer (von) Identifikationsmarke (n) oder einer (von) Unterlage (n), oder auch der Schaffung eines Bundes (13) ganz oder teilweise daran gehindert wird, sich der Dicke nach auszudehnen.

2. Verfahren zur Herstellung eines flexiblen Schlauchs nach Anspruch 1, dadurch gekennzeichnet, daß im Verlauf der Herstellung mindestens ein Schlauchbinder (10) dazu verwendet wird, örtlich und mindestens teilweise die Ausdehnung der in den zelligen Zustand überführbare elastomeren Zusammensetzung der Schicht (3) der Dicke nach zu verhindern, wodurch sich der Schlauchbinder (10) an der Wand des flexiblen Schlauchs integriert befindet.

**Claims**

1. A process for manufacturing a flexible tube comprising, in at least one widthwise and lengthwise portion of its wall, a layer of elastomeric composition, compact at the time that said flexible tube is built up but being cellularised during vulcanisation leading to the formation, on the outer periphery, of a skin with a substantially smooth appearance, and comprising marking, fitting and/or identification means integrated into zones of the wall, characterised in that the cellularisable elastomeric composition of the layer (3) is prevented from expanding widthwise, totally or partially, in at least one of said zones corresponding to the creation of rib(s) or groove(s) (14) for fitting collar(s) (10) for clamping onto a joining piece, to the creation of identification mark(s) or of support(s), or else to the creation of a shoulder (13).

2. A process for manufacturing a flexible tube according to Claim 1, characterised in that at least one clamping collar (10) is used during manufacture, to prevent, locally and at least partially, the widthwise expansion, of the cellularisable elastomeric composition of the layer (3), said clamping collar (10) thus being integrated into the wall of said flexible tube.

FIG_1'a

FIG_1'b

FIG_1'c

FIG_1d

FIG_1e

FIG_1f

$\underline{FIG\_2a}$

$\underline{FIG\_2b}$

FIG_3a

FIG_3b